(19) Europäisches Patentamt
European Patent Office
Office européen des brevets

(11) **EP 1 607 132 A1**

(12) **EUROPEAN PATENT APPLICATION**
published in accordance with Art. 158(3) EPC

(43) Date of publication:
21.12.2005 Bulletin 2005/51

(51) Int Cl.7: **B01D 53/94**

(21) Application number: 03809439.7

(86) International application number:
**PCT/JP2003/012328**

(22) Date of filing: 26.09.2003

(87) International publication number:
**WO 2004/037395 (06.05.2004 Gazette 2004/19)**

(84) Designated Contracting States:
**AT BE BG CH CY CZ DE DK EE ES FI FR GB GR HU IE IT LI LU MC NL PT RO SE SI SK TR**

(30) Priority: 23.10.2002 JP 2002308447

(71) Applicants:
• **MITSUBISHI DENKI KABUSHIKI KAISHA**
**Tokyo 100-8310 (JP)**
• **Machida, Masato**
**Kumamoto-shi, Kumamoto 860-8555 (JP)**

(72) Inventors:
• **Machida, Masato, Kumamoto University**
**Kumamoto-Shi, Kumamoto 860-8555 (JP)**

• **Yamauchi, Shiro, Mitsubishi Denki K. K.**
**Tokyo 100-8310 (JP)**
• **Kimura, Minoru, Mitsubishi Denki K. K.**
**Tokyo 100-8310 (JP)**
• **Yamaji, Shigeru, Mitsubishi Denki K. K.**
**Tokyo 100-8310 (JP)**

(74) Representative: **Sajda, Wolf E. et al**
**MEISSNER, BOLTE & PARTNER**
**Postfach 86 06 24**
**81633 München (DE)**

(54) **NITROGEN OXIDE DECOMPOSING ELEMENT AND NITROGEN OXIDE DECOMPOSING APPARATUS INCLUDING THE SAME**

(57)     A nitrogen oxide decomposing element and a nitrogen oxide decomposing apparatus can perform a treatment at a relatively low temperature without using a material, which is suspected to have influence on the environment and human body, as an oxidant or a catalyst. There is proposed a nitrogen oxide decomposing element 1 including a conductive solid electrolyte film 2 for selectively allowing a hydrogen ion to pass through, a first electrode layer 3 made of an electronic conductivity base material and a catalyst for accelerating anodic oxidation, a second electrode layer 4 made of an electronic conductivity base material and a catalyst for accelerating cathodic reduction, and a platinum group catalyst 6 supported by a porous metal oxide 5 disposed to be adjacent to the second electrode layer 4. A low-power consumption nitrogen oxide decomposing apparatus which can efficiently use electric energy is obtained by locating a nitrogen oxide sensor 14 in the vicinity of the platinum group catalyst 6 supported by the metal oxide 5, and controlling the magnitude of a current flowing between the first and the second electrode layers 3 and 4 and the energization time by a power source/control device 15 in accordance with the concentration of nitrogen oxide detected by the nitrogen oxide sensor 14.

FIG. 1

EP 1 607 132 A1

**Description**

Technical Field

The present invention relates to a nitrogen oxide decomposing element for decomposing and removing nitrogen oxide and a nitrogen oxide decomposing apparatus including the same.

Background Art

A nitrogen oxide purging system for decomposing and removing nitrogen oxide has various uses, such as an exhaust gas treatment of an automobile, a distributed cogeneration system, and air cleaning of an enclosed space such as a long tunnel or a factory, and increased demand is expected into the future. As a conventional technique to remove nitrogen oxide, for example, there is JP-A-2002-153755 as patent document 1. This patent document 1 discloses a method of purging nitrogen oxide NOx by using ammonia as a reductant. There is disclosed that in this method, an ammonia molecule ($NH_3$ molecule) donates an electron through an adjacent noble metal to nitrogen monoxide (NO) adsorbed on the noble metal, and as a result, the nitrogen monoxide (NO) becomes apt to dissociate into a (N atoms) become a nitrogen molecule ($N_2$ molecule). At this time, the temperature of a flowing gas is 400°C.

As another prior art to remove nitrogen oxide, there is JP-A-11-342313 as patent document 2. The patent document 2 discloses a method of treating a harmful substance-containing gas and an apparatus therefor, in which ozone as a highly safe oxidizer is used to be capable of treating a gas containing harmful substances such as various organic contaminants, malodorous components, and bacteria. The patent document 2 proposes that after ozone is added to and mixed with the gas containing the harmful substances, the gas is passed through an adsorbent layer filled with high silica adsorbent for adsorbing the ozone and for adsorbing the harmful substances, so that the harmful substances in the gas are made harmless by the action of the ozone.

However, the method proposed in patent document 1 has problems that it is not desirable to use ammonia in consideration for the environment and human body, and further, it is necessary to perform the treatment at a high temperature of 400°C, it is difficult to perform the treatment adapted to variations in the concentration of nitrogen oxide, and the treatment of unreacted ammonia is required. Also in the method of patent document 2, in the case where the adsorbed nitrogen oxide is desorbed to reuse the adsorbent, it is necessary to perform the treatment at a high temperature of 300 to 400°C.

The invention has been made to solve the foregoing problems, and a first object thereof is to propose a nitrogen oxide decomposing element capable of performing a treatment at a relatively low temperature without using a material, which is suspected to have influence on the environment and human body, as an oxidant or a catalyst.

A second object thereof is to propose a nitrogen oxide decomposing apparatus using the above nitrogen oxide decomposing element.

Disclosure of the Invention

A nitrogen oxide decomposing element of the invention includes a conductive solid electrolyte film for selectively allowing a hydrogen ion to pass through, a first electrode made of an electronic conductivity base material disposed on a part of a surface of the conductive solid electrolyte film and a catalyst for accelerating anodic oxidation, a second electrode made of an electronic conductivity base material disposed on the other part of the surface of the conductive solid electrolyte film and a catalyst for accelerating cathodic reduction, and a platinum group catalyst supported by a porous metal oxide disposed to be adjacent to the second electrode.

According to the nitrogen oxide decomposing element of the invention, the nitrogen oxide decomposing element is obtained in which a treatment can be performed at a relatively low temperature (60°C to 80°C) without using a material, which is suspected to have influence on the environment and human body, as an oxidant or a catalyst.

Besides, a nitrogen oxide decomposing apparatus of the invention includes the nitrogen oxide decomposing element, a frame holding this, a gas supply ports for supplying an anode gas and a cathode gas into this frame, a gas exhaust port for exhausting the gases in the frame to outside, and a power source for applying a DC voltage between the first and the second electrodes.

According to the nitrogen oxide decomposing apparatus of the invention, the nitrogen oxide decomposing apparatus is obtained in which a treatment can be performed at a relatively low temperature (60°C to 80°C) without using a material, which is suspected to have influence on the environment and human body, as an oxidant or a catalyst.

Brief Description of the Drawings

Fig. 1 is a schematic view showing a nitrogen oxide decomposing apparatus of embodiment 1 of the invention.

Fig. 2 is a view showing a current effect of the nitrogen oxide decomposing apparatus of embodiment 1 of the invention with respect to the removal of nitrogen monoxide at 60°C.

Fig. 3 is a view showing a current effect of the nitrogen oxide decomposing apparatus of embodiment 1 of the invention with respect to the removal of nitrogen monoxide at 70°C.

Fig. 4 is a view showing a current effect of the nitrogen oxide decomposing apparatus of embodiment 1 of the invention with respect to the removal of nitrogen monoxide at 80°C.

Fig. 5 is a view showing the current effects of the nitrogen oxide decomposing apparatus of embodiment 1 of the invention with respect to the removal of nitrogen oxide at 60°C, 70°C and 80°C.

Fig. 6 is a schematic view showing a nitrogen oxide decomposing apparatus of embodiment 3 of the invention.

Fig. 7 is a view showing the operation and effect of the nitrogen oxide decomposing apparatus of embodiment 3 of the invention.

Fig. 8 is a schematic view showing a nitrogen oxide decomposing apparatus of embodiment 4 of the invention.

Best Mode for Carrying Out the Invention

Hereinafter, embodiments of the invention will be described with reference to the drawings.

Embodiment 1

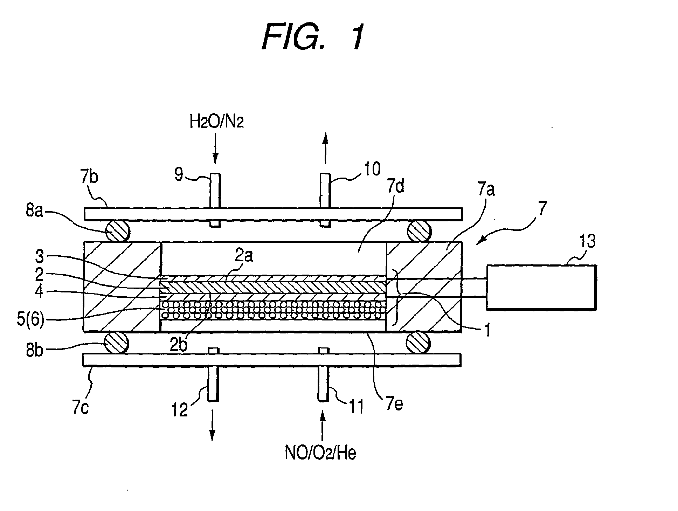

Fig. 1 is a schematic view showing a nitrogen oxide decomposing element of embodiment 1 of the invention and a structure of a nitrogen oxide decomposing apparatus.

The nitrogen oxide decomposing apparatus of embodiment 1 includes a nitrogen oxide decomposing element 1 and a frame 7 for housing it. The nitrogen oxide decomposing element 1 includes a conductive solid electrolyte film 2 for selectively allowing a hydrogen ion to pass through, a first electrode layer 3 made of an electronic conductivity base material disposed to be in contact with a part of a surface of the solid electrolyte film 2 and a catalyst (hereinafter referred to as an anodic catalyst) for accelerating anodic oxidation, a second electrode layer 4 made of an electronic conductivity basematerial disposed to be in contact with the other part of the surface of the solid electrolyte film 2 and a catalyst (hereinafter referred to as a cathodic catalyst) for accelerating cathodic oxidation, and a platinum group catalyst 6 supported by a porous metal oxide 5 disposed to be adjacent to the second electrode layer 4.

The solid electrolyte film 2 has plane surfaces 2a and 2b opposite to each other, and the first electrode layer 3 and the second electrode layer 4 are respectively formed to be in close contact with the plane surfaces 2a and 2b.

In embodiment 1, as the solid electrolyte film 2, Nafion 117 (trade name) made by Dupont Company is used. As each of the first electrode layer 3 and the second electrode layer 4, a feeding body is used in which a porous platinum thin film layer and a porous titanium are laminated by plating, and a titanium surface of the porous titanium is further plated with platinum, and the platinum plating of the surface has functions of the anodic catalyst and the cathodic catalyst.

In embodiment 1, although platinum is used as both the anodic catalyst and the cathodic catalyst, it is not necessary that these are the same, and as the anodic catalyst, in addition to platinum, it is possible to use iridium, iridium oxide or the like. In the case where the first electrode layer 3 and the second electrode layer 4 respectively do not include the anodic catalyst and the cathodic catalyst, unless a very high voltage is applied to the nitrogen oxide decomposing element 1, the reactions of anodic oxidation and cathodic reduction are not quickly promoted, and therefore, these catalysts are indispensable.

Further, the porous metal oxide 5 having the function of occluding and concentrating nitrogen oxide is disposed to be in contact with the second electrode layer 4, and platinum as the platinum group catalyst 6 is supported by the metal oxide 5 at a weight ratio of 1 wt%. That is, the metal molecules of the platinum group catalyst 6 are contained in pores of the porous metal oxide 5. As a method of causing the porous metal oxide 5 to support the platinum group catalyst 6, a porous body is immersed in a solution containing a platinum component, for example, a chloroplatinic acid ($H_2PtCl_6$) solution, and is heated up to about 400°C, so that platinum is supported by the porous body. In embodiment 1, hydrogen-terminated zeolite is used as the porous metal oxide 5. The zeolite includes aluminum oxide and silicon oxide as components, and is denoted by using a general formula $W_m Z_n O_{2n} \cdot s H_2 O$. Where, in this general formula, W denotes one of sodium (Na), calcium (Ca), potassium (K), barium (Ba) and strontium (Sr), Z denotes silicon (Si) + aluminum (Al), the ratio of silicon (Si) to aluminum (Al) is larger than 1 (Si/Al > 1), and s is not constant.

The metal oxide 5 used in embodiment 1 is an acidic oxide or an amphoteric oxide. The acidic oxide reacts with a base (alkali) to form salt, and a high oxidation number oxide of transition metal, for example, titanium oxide ($TiO_2$) belongs to this. On the other hand, the amphoteric oxide is one oxide which indicates an acidity to a base and indicate a basicity to an acid, and for example, aluminum oxide ($Al_2O_3$) belongs to this.

The nitrogen oxide decomposing element 1 constructed of the solid electrolyte film 2, the first electrode layer 3, the second electrode layer 4, and the platinum group catalyst 6 supported by the metal oxide 5 is held by the frame 7. The frame 7 is constructed of a circular frame body 7a, an upper cover body 7b airtightly joined to its upper end face through an O-ring 8a, and a lower cover body 7c airtightly joined to its lower end face through an O-ring 8b. The space in the frame 7 is divided into one at the side of the first electrode 3 and one at the side of the second electrode 4 by the solid electrolyte film 2, and an upper treatment chamber 7d and a lower treatment chamber 7e are formed. An anode gas supply port 9 and an anode gas exhaust port 10 are attached to the upper cover body 7b, and a mixed gas of water vapor ($H_2O$) and nitrogen ($N_2$) is supplied into the upper treatment chamber 7d through the anode gas supply port 9. The nitrogen ($N_2$) may be replaced by air. A cathode gas supply port 11 and a cathode gas exhaust port 12 are attached to the lower cover body 7c, and a mixed gas of nitrogen monoxide (NO) as nitrogen oxide, oxygen ($O_2$) and helium (He) is supplied into the lower treatment chamber 7e through the cathode gas support port 11.

Reactions at the respective places of the nitrogen oxide decomposing element 1 in embodiment 1 are as follows.

Reaction (anodic reaction) on the first electrode layer

$$H_2O \rightarrow 2H^+ + 1/2O_2 + 2e^- \qquad \text{(chemical formula 1)}$$

Reaction (cathodic reaction) on the second electrode layer

$$2H^+ + 1/2O_2 + 2e^- \rightarrow H_2O \qquad \text{(chemical formula 2)}$$

$$2H^+ + 2e^- \rightarrow H_2 \qquad \text{(chemical formula 3)}$$

$$2H^+ + 2NO + 2e^- \rightarrow N_2 + H_2O + 1/2O_2 \qquad \text{(chemical formula 4)}$$

$$2H^+ + 2e^- + 1/2NO + 1/4O_2 \rightarrow 1/4N_2 + H_2O \qquad \text{(chemical formula 5)}$$

$$2H^+ + 2e^- + 2/3NO + 1/3O_2 \rightarrow 1/3N_2O + H_2O \qquad \text{(chemical formula 6)}$$

$$N_2O + 2H^+ + 2e^- \rightarrow N_2 + H_2O \qquad \text{(chemical formula 7)}$$

Reaction on the platinum group catalyst (cathode side)

$$H_2 + 2NO \rightarrow N_2 + H_2O + 1/2O_2 \qquad \text{(chemical formula 8)}$$

$$2H_2 + NO + 1/2O_2 \rightarrow 2/1N_2 + 2H_2O \qquad \text{(chemical formula 9)}$$

$$3/2H_2 + NO + 1/2O_2 \rightarrow 1/2N_2O + 3/2H_2O \qquad \text{(chemical formula 10)}$$

$$N_2O + H_2 \rightarrow N_2 + H_2O \qquad \text{(chemical formula 11)}$$

The function of the nitrogen oxide decomposing element 1 of embodiment 1 will be described with reference to the chemical formula 1 to the chemical formula 11. A nitrogen gas containing water vapor is supplied through the anode gas supply port 9 into the upper treatment chamber 7d at the side of the first electrode layer 3, and is made to come in contact with the first electrode layer 3. At the same time, a gas containing nitrogen oxide is supplied through the cathode supply port 11 into the lower processing chamber 7e at the side of the second electrode layer 4, and is made to come in contact with the second electrode layer 4. In this state, the energization of a DC power source 13 is started, and when a DC voltage is applied between the first and the second electrode layers 3 and 4, the first electrode layer 3 becomes an anode, the second electrode layer 4 becomes a cathode, and the anodic oxidation and cathodic reduction occur by the actions of the catalysts provided in the respective layers.

First, in the first electrode layer 3 as the anode, as indicated by the formula (chemical formula 1), the water-molecule ($H_2O$) is electrolyzed and the hydrogen ion ($H^+$) is produced. The hydrogen ion is moved to the side of the second electrode 4 through the solid electrolyte film 2, reacts with the nitrogen oxide (NO) on the second electrode layer 4, and as indicated by (chemical formula 4) and (chemical formula 5), the nitrogen oxide is electrochemically reduced and decomposed into the nitrogen molecule ($N_2$) and water molecule. Besides, as indicated by the formula (chemical formula 6), in the case where nitrous oxide ($N_2O$) is produced, it is further reduced and decomposed as indicated by the formula (chemical formula 7), and is decomposed into the nitrogen molecule and water molecule. On the platinum group catalyst 6 at the cathode side, the hydrogen molecule (chemical formula 3) produced on the second electrode 4 and the nitrogen oxide react with each other by the action of the platinum group catalyst 6, and the nitrogen oxide is chemically reduced and decomposed as indicated by the formulas (chemical formula 8) to (chemical formula 11).

As stated above, in the nitrogen oxide decomposing element 1 of embodiment 1, the nitrogen oxide is decomposed by two kinds of reactions, that is , the chemical reductive reaction (formulas (chemical formula 8) to (chemical formula 11)) in which only molecules are involved, and the electrochemical reductive reaction (formulas (chemical formula 1) to (chemical formula 7)) in which ions are involved. There is a case where these two kinds of reactions occur at the same time, and there is a case where only one of them occurs.

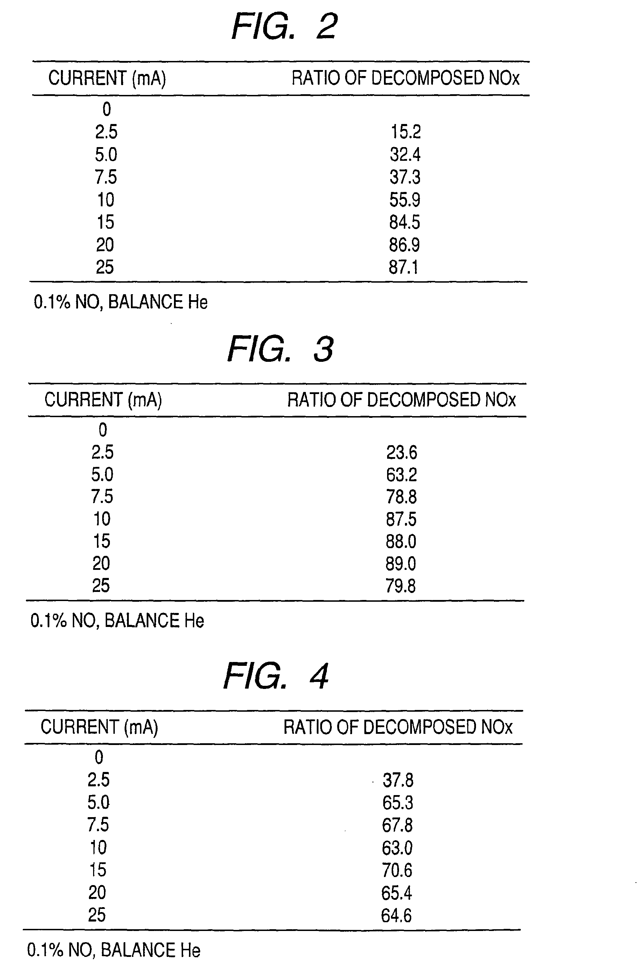

Figs. 2, 3 and 4 show current effects with respect to the removal of nitrogen oxide in the case where in the nitrogen oxide decomposing apparatus constructed as described above, the area of each of the reaction surfaces, that is, the first and the second electrode layers 3 and 4 is 0.8 $cm^2$, nitrogen monoxide, as the nitrogen oxide, having a concentration of 1000 ppm and contained in helium (He) gas is supplied at a flow rate 10 ml/min, and a DC constant current is supplied between the first and the second electrode layers 3 and 4. Here, the nitrogen oxide (NOx) is the sum of NO and $NO_2$. In Figs. 2, 3 and 4, the ratios of NOx decomposed at 60°C, 70°C and 80°C are obtained by analyzing gases exhausted from the cathode gas exhaust port 12 by an analyzer.

That is, they are obtained by (ratio % of decomposed NOx) = {(NOx concentration (0.1%) at the supply port) - (NOx concentration % at the exhaust port)} ÷ (NOx concentration (0.1%) at the supply port) x 100. Here, the NOx concentration is the sum of the concentrations of NO and $NO_2$.

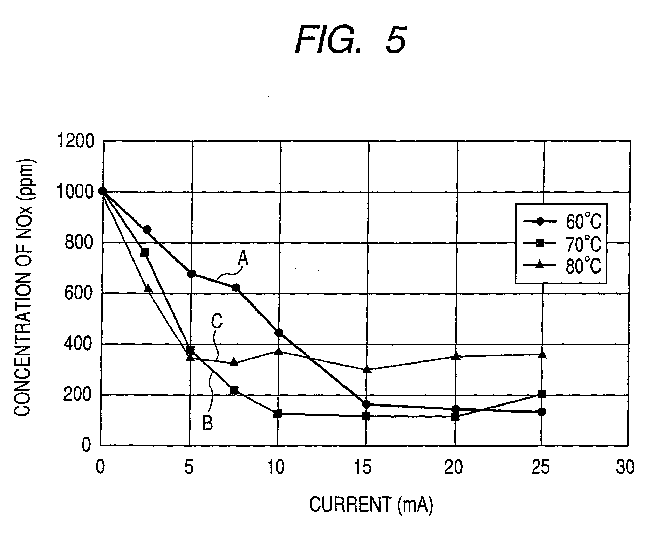

In Fig. 5, the vertical axis indicates the nitrogen monoxide concentration at the exhaust port and the horizontal axis indicates the current, and Figs. 2, 3 and 4 are shown as a graph. A curved line A indicates the case of 60°C of Fig. 2, a curved line B indicates the case of 70°C of Fig. 3, and a curved line C indicates the case of 80°C of Fig. 4. As shown in Fig. 5, at any temperatures, as the current density increases, the decomposition removal effect of the nitrogen oxide increases, and in the range of the current density of 15 $mA/cm^2$ or higher, about 80% of the nitrogen oxide was removed. Since the nitrogen oxide removal effect at 80°C, which is highest among these, is inferior to the results at 60°C and 70°C, it is indicated that even in the case where the temperature is raised up to 80°C or higher, a higher effect is not obtained. That is, the nitrogen oxide decomposing apparatus in this embodiment can sufficiently exhibit the effect at a relatively low temperature of 60°C to 80°C.

As stated above, according to embodiment 1, there is proposed the nitrogen oxide decomposing element 1 including the first electrode layer 3 and the second electrode layer 4 respectively disposed on the opposed plane surfaces 2a and 2b of the surface of the solid electrolyte film 2, and the platinum group catalyst 6 supported by the porous metal oxide 5 disposed to be adjacent to the second electrode layer 4. This nitrogen oxide decomposing element 1 is held by the frame 7, the gas containing water vapor as the anode gas is supplied through the anode gas supply port 9 into the frame 7 and the gas containing nitrogen oxide as the cathode gas is supplied through the cathode gas supply port 11, and the DC voltage is applied between the first and the second electrode layers 3 and 4 by the DC power source 13. As a result, the nitrogen oxide decomposing apparatus is obtained which can perform the treatment at a relatively low temperature (60°C to 80°C) without using a material, which is suspected to have influence on the environment or human body, as the oxidant or the catalyst.

In embodiment 1, although the example has been described in which the hydrogen-terminated zeolite is used as the porous metal oxide 5 for supporting the platinum group catalyst 6, the same effect is obtained even in the case where a metal oxide containing at least one component of titanium dioxide, zirconium dioxide, aluminum oxide, silicon oxide, magnesium oxide and tin oxide is used. Besides, in embodiment 1, although the example has been described in which platinum is used as the platinum group catalyst 6 supported by the metal oxide 5, the same effect is also obtained by iridium or palladium.

Embodiment 2

A nitrogen oxide decomposing element of embodiment 2 (not shown) is such that a mixed layer including an electronic conductivity base material, a solid electrolyte film, a platinum group catalyst and a cathodic catalyst is disposed between the solid electrolyte film 2 of the nitrogen oxide decomposing element 1 (see Fig. 1) of embodiment 1 and the second electrode 4 and is brought into close contact therewith. This mixed layer can be formed by dispersing a platinum group catalyst, a cathodic catalyst, a fine-grained electronic conductivity base material, and a fine-grained solid electrolyte film into a solution, heating them to evaporate volatile components, and combining the fine grain components with each other.

Since the electrochemical reactions described in embodiment 1 occur at an interface between each electrode and the solid electrolyte film, the amount of reaction and the reaction speed are increased in proportion to the area of the interface. In embodiment 2, the interface between the electrode and the solid electrolyte film, that is, the reaction site of the electrochemical reaction is increased at the side of the second electrode layer 4, so that the efficiency of the electrochemical reductive reaction of the nitrogen oxide is improved.

Embodiment 3

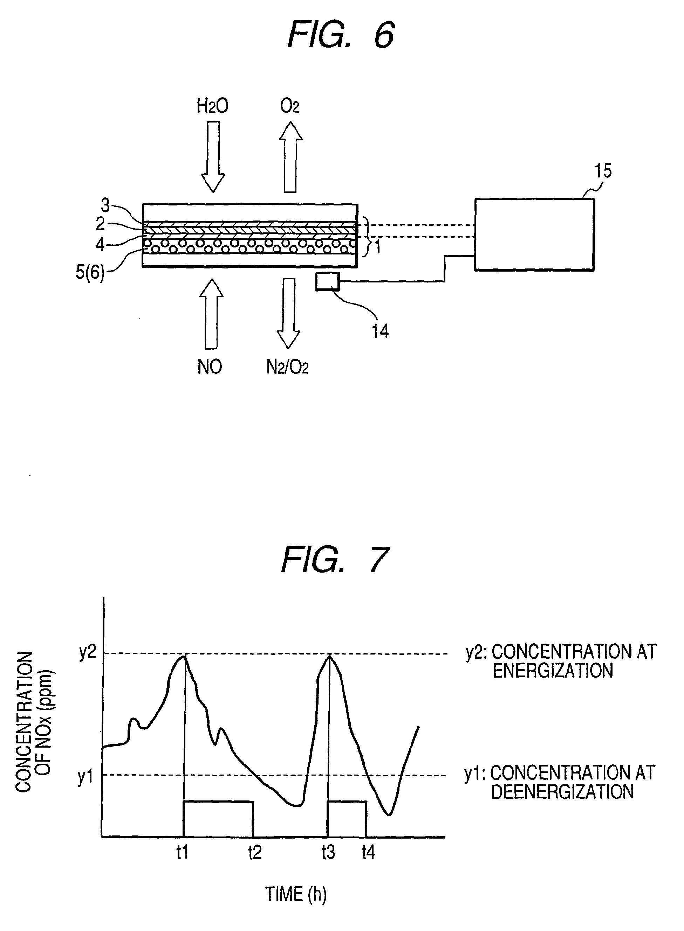

Fig. 6 is a schematic view showing a nitrogen oxide decomposing apparatus of embodiment 3. In the drawings, same or equivalent parts are denoted by the same reference numerals and their description will be omitted. The nitrogen oxide decomposing apparatus in this embodiment includes a nitrogen oxide sensor 14 for detecting the concentration of nitrogen oxide, and a power source/control device 15 for controlling the magnitude of a current flowing between a first and a second current layers 3 and 4 and an energization time in accordance with the concentration of the nitrogen oxide detected by the nitrogen oxide sensor 14. By this, it is possible to control the magnitude of the current flowing through the nitrogen oxide decomposing element 1 and the energization time in accordance with the concentration of the nitrogen oxide. Incidentally, it is desirable that the nitrogen oxide sensor 14 is disposed in the vicinity of a platinum group catalyst 6 supported by a metal oxide 5 at a cathode side. For example, the nitrogen oxide sensor 14 including a sensitive part having a size of about 1/10 of the nitrogen oxide decomposing element 1 is fixed in the vicinity of the metal oxide 5 and information is extracted to the outside through a signal line.

The operation and effect of the nitrogen oxide decomposing apparatus of this embodiment will be described with reference to Fig. 7. In the drawing, y1 and y2 denote previously set nitrogen oxide concentration values, y1 denotes an energization stop concentration, and y2 denotes an energization start concentration. That is, at time points t1 and t3 when the nitrogen oxide concentration detected by the nitrogen oxide sensor 14 exceeds y2, the energization by the power source/control device 15 is started, and the decomposition and removal of the nitrogen oxide is performed. At time points t2 and t4 when the nitrogen oxide concentration is lowered to y1 or less, the energization is stopped. Thus, only in the case where the nitrogen oxide concentration in the atmosphere becomes high, or the amount of the nitrogen oxide occluded and stored in the platinum group catalyst 6 supported by the metal oxide 5 becomes high and the nitrogen oxide concentration of a vapor phase in equilibrium with the amount (occlusion concentration) becomes high, a current flows through the nitrogen oxide decomposing element 1, and the nitrogen oxide is decomposed and removed. Further, although not shown, the power source/control device 15 can also operate to increase or decrease the amount of the flowing current in accordance with the increase or decrease amount of the nitrogen oxide concentration.

As described above, according to this embodiment, the low-power consumption nitrogen oxide decomposing apparatus is obtained which can deal with the concentration change of the nitrogen oxide, and can efficiently use electric energy.

Embodiment 4

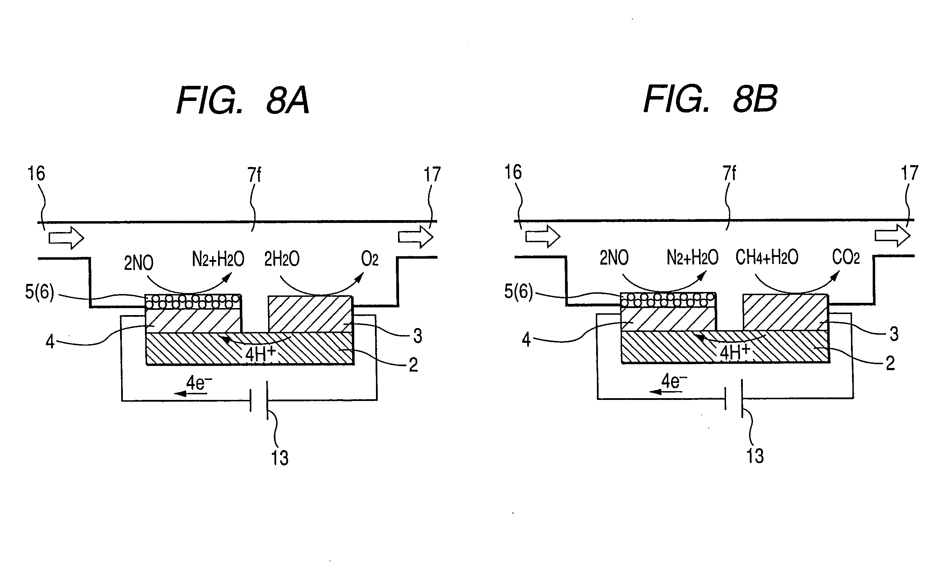

Fig. 8 is a schematic view showing a nitrogen oxide decomposing apparatus of embodiment 4 of the invention. This embodiment 4 includes a case 1 shown in Fig. 8(a) and a case 2 shown in Fig. 8(b). Each of these cases 1 and 2 includes one gas supply port 16 and one gas exhaust port 17. Besides, in each of both the cases 1 and 2, a first electrode layer 3 and a second electrode layer 4 are disposed to be separate from each other on one surface 2a of a solid electrolyte film 2, and a metal oxide 5 and a platinum group catalyst 6 are disposed on the second electrode layer 4.

The case 1 of Fig. 8(a) is the case in which similarly to the gases from the gas supply ports 9 and 11 of embodiment 1, water vapor ($H_2O$), nitrogen gas ($N_2$), nitrogen monoxide gas (NO), oxygen gas ($O_2$), and helium gas (He) are supplied from the gas supply port 16, and a reaction with the water vapor ($H_2O$) occurs at the side of the first electrode 3 as the anode. The case 2 of Fig. 8(b) is the case in which water vapor ($H_2O$), nitrogen gas ($N_2$), nitrogen monoxide gas (NO), oxygen gas ($O_2$), helium gas (He) and hydrocarbon gas ($CH_4$) are supplied from the gas supply port 16, and a reaction of the hydrocarbon ($CH_4$) with the water vapor occurs at the side of the first electrode layer 3 as the anode. In the drawings, same or equivalent portions are denoted by the same reference numerals and their description will be omitted.

In the nitrogen oxide decomposing apparatus of embodiment 4, the first electrode layer 3 and the second electrode layer 4 are respectively provided on the same plane surface of the surface of the solid electrolyte film 2. The materials constituting the solid electrolyte film 2 and the first and the second electrode layers 3 and 4 are the same as those of embodiment 1. As the platinum group catalyst 6 supported by hydrogen-terminated zeolite as the porous metal oxide 5, for example, iridium is provided on the second electrode layer 4. A mixed gas of a gas containing water vapor and a gas containing nitrogen oxide is made to come into contact with the first and the second electrode layers 3 and 4, so that similarly to the embodiment 1, the nitrogen oxide is decomposed and removed. The reactions at the respective places of the nitrogen oxide decomposing element of embodiment 4 will be set forth below with respect to the case 1 and the case 2.

Case 1

$$\text{(anode)} \quad 2H_2O \rightarrow 4H^+ + O_2 + 4e^- \qquad \text{(chemical formula 12)}$$

$$\text{(cathode)} \quad 2NO + 4H^+ + 4e^- \rightarrow N_2 + 2H_2O \qquad \text{(chemical formula 13)}$$

$$\text{(total)} \quad 2NO \rightarrow N_2 + O_2 \qquad \text{(chemical formula 14)}$$

Case 2

$$\text{(anode)} \quad CH_4 + 2H_2O \rightarrow 8H^+ + CO_2 + 8e^- \qquad \text{(chemical formula 15)}$$

$$\text{(cathode)} \quad 4NO + 8H^+ + 8e^- \rightarrow 2N_2 + 4H_2O \qquad \text{(chemical formula 16)}$$

$$\text{(total)} \quad 4NO + CH_4 \rightarrow 2N_2 + CO_2 + 2H_2O \qquad \text{(chemical formula 17)}$$

In the case 1, at the first electrode layer 3 as the anode, as indicated by the formula (chemical formula 12), the water molecule ($H_2O$) is electrolyzed, and hydrogen ions ($H^+$) are produced. In the case 2, as indicated by the formula (chemical formula 15), the water molecule and the hydrocarbon ($CH_4$) are electrolyzed, and hydrogen ions and carbon dioxide ($CO_2$) are produced. These hydrogen ions pass through the solid electrolyte film 2 and are moved to the side of the second electrode layer 4, and as indicated by the formulas (chemical formula 13) and (chemical formula 16), the nitrogen oxide (NO) is reduced and decomposed into the nitrogen ($N_2$) and the water molecule ($H_2O$).

In embodiment 4, in contrast to embodiment 1 (see Fig. 1) in which the space in the frame 7 is divided into the upper treatment chamber 7d and the lower treatment chamber 7e by the solid electrolyte film 2, the reactions at the anode side and the cathode side occur in the same processing chamber 7f. Thus, the one gas supply port 16 used both as the anode gas supply port 9 and the cathode gas supply port 11 can be adopted, and as a result, the anode gas and the cathode gas are mixed. However, since the objective reactions occur by the actions of the anodic catalyst and the cathodic catalyst provided in the respective electrodes, the same effect as the embodiment 1 can be obtained. Further, since the structural parts of the apparatus are decreased, and the integration of the element on the plane surface becomes possible, the nitrogen oxide decomposing apparatus can be simplified and miniaturized. By this, the installation in the vicinity of the source of nitrogen oxide becomes possible, and the decomposition and removal can be efficiently performed in a high concentration area of the nitrogen oxide.

Industrial Applicability

The nitrogen oxide decomposing element of the invention and the nitrogen oxide decomposing apparatus including the same have various uses such as exhaust gas treatment of an automobile, a distributed cogeneration system, and air cleaning of an enclosed space such as a long tunnel or a factory.

**Claims**

1.  A nitrogen oxide decomposing element, **characterized by** comprising:

    a conductive solid electrolyte film for selectively allowing a hydrogen ion to pass through;
    a first electrode made of an electronic conductivity base material disposed on a part of a surface of the conductive solid electrolyte film and a catalyst for accelerating anodic oxidation;
    a second electrode made of an electronic conductivity base material disposed on the other part of the surface of the conductive solid electrolyte film and a catalyst for accelerating cathodic reduction; and
    a platinum group catalyst supported by a porous metal oxide disposed to be adjacent to the second electrode.

2.  The nitrogen oxide decomposing element according to claim 1, wherein the first and the second electrodes are respectively provided on opposed plane surfaces of the surface of the conductive solid electrolyte film.

3.  The nitrogen oxide decomposing element according to claim 1, wherein the first and the second electrodes are provided on a same plane surface of the surface of the conductive solid electrolyte film.

4.  The nitrogen oxide decomposing element according to claim 1, wherein a mixed layer including an electronic conductivity base material, a solid electrolyte film, a platinum group catalyst and a cathodic catalyst is provided between the conductive solid electrolyte film and the second electrode.

5.  The nitrogen oxide decomposing element according to claim 1, wherein the metal oxide is an acidic oxide or an amphoteric oxide.

6.  The nitrogen oxide decomposing element according to claim 5, wherein the metal oxide includes at least one component of titanium dioxide, zirconium dioxide, aluminum oxide, silicon oxide, magnesium oxide, and tin oxide.

7.  The nitrogen oxide decomposing element according to claim 1, wherein the platinum group catalyst includes at least one component of platinum, iridium, and palladium.

8.  A nitrogen oxide decomposing apparatus, **characterized by** comprising:

    the nitrogen oxide decomposing element according to any one of claims 1 to 7 and a frame holding this;
    a gas supply ports for supplying an anode gas and a cathode gas into the frame;
    a gas exhaust port for exhausting the gases in the frame to outside; and
    a power source for applying a DC voltage between the first and the second electrodes.

9.  The nitrogen oxide decomposing apparatus according to claim 8, wherein a gas containing water vapor is supplied as the anode gas.

10. The nitrogen oxide decomposing apparatus according to claim 8, wherein a gas containing nitrogen oxide is supplied as the cathode gas.

11. The nitrogen oxide decomposing apparatus according to claim 8, wherein the nitrogen oxide decomposing apparatus further comprises a sensor for detecting a concentration of nitrogen oxide, and a control device for controlling a magnitude of a current flowing between the first and the second electrodes and an energization time in accordance with the concentration of the nitrogen oxide detected by the sensor.

12. The nitrogen oxide decomposing apparatus according to claim 11, wherein the sensor is located in a vicinity of the platinum group catalyst supported by the metal oxide.

# FIG. 1

# FIG. 2

| CURRENT (mA) | RATIO OF DECOMPOSED NOx |
|---|---|
| 0 | |
| 2.5 | 15.2 |
| 5.0 | 32.4 |
| 7.5 | 37.3 |
| 10 | 55.9 |
| 15 | 84.5 |
| 20 | 86.9 |
| 25 | 87.1 |

0.1% NO, BALANCE He

# FIG. 3

| CURRENT (mA) | RATIO OF DECOMPOSED NOx |
|---|---|
| 0 | |
| 2.5 | 23.6 |
| 5.0 | 63.2 |
| 7.5 | 78.8 |
| 10 | 87.5 |
| 15 | 88.0 |
| 20 | 89.0 |
| 25 | 79.8 |

0.1% NO, BALANCE He

# FIG. 4

| CURRENT (mA) | RATIO OF DECOMPOSED NOx |
|---|---|
| 0 | |
| 2.5 | 37.8 |
| 5.0 | 65.3 |
| 7.5 | 67.8 |
| 10 | 63.0 |
| 15 | 70.6 |
| 20 | 65.4 |
| 25 | 64.6 |

0.1% NO, BALANCE He

## FIG. 5

# FIG. 6

H2O          O2

3
2
4
5(6)

15

14

NO          N2/O2

# FIG. 7

y2 ---- y2: CONCENTRATION AT ENERGIZATION

y1 ---- y1: CONCENTRATION AT DEENERGIZATION

CONCENTRATION OF NOx (ppm)

t1    t2    t3  t4

TIME (h)

FIG. 8A

FIG. 8B

EP 1 607 132 A1

## INTERNATIONAL SEARCH REPORT

| International application No. |
|---|
| PCT/JP03/12328 |

**A. CLASSIFICATION OF SUBJECT MATTER**
Int.Cl⁷ B01D53/94

According to International Patent Classification (IPC) or to both national classification and IPC

**B. FIELDS SEARCHED**

Minimum documentation searched (classification system followed by classification symbols)
Int.Cl⁷ B01J21/00-38/74, B01D53/00-53/96

Documentation searched other than minimum documentation to the extent that such documents are included in the fields searched
Jitsuyo Shinan Koho        1922-1996    Jitsuyo Shinan Toroku Koho    1996-2003
Kokai Jitsuyo Shinan Koho  1971-2003    Toroku Jitsuyo Shinan Koho    1994-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6-7642 A (Toyota Central Research And Development Laboratories, Inc.), 18 January, 1994 (18.01.94), Full text; Figs. 1 to 3 & EP 566071 A1 & US 5352337 A1 | 1-12 |
| Y | JP 8-168673 A (Director General, Agency of Industrial Science and Technology), 02 July, 1996 (02.07.96), Full text; Figs. 1 to 10 (Family: none) | 3 |
| Y | JP 7-246318 A (Toyota Central Research And Development Laboratories, Inc.), 26 September, 1995 (26.09.95), Full text; Figs. 1 to 4 (Family: none) | 1,5-7 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 December, 2003 (26.12.03) | 20 January, 2004 (20.01.04) |

| Name and mailing address of the ISA/ Japanese Patent Office | Authorized officer |
|---|---|
| Facsimile No. | Telephone No. |

Form PCT/ISA/210 (second sheet) (July 1998)

14

**EP 1 607 132 A1**

| INTERNATIONAL SEARCH REPORT | International application No. |
| | PCT/JP03/12328 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-204960 A  (Isuzu Ceramics Research Institute Co., Ltd.), 23 July, 2002 (23.07.02), Full text; Figs. 1 to 5 (Family: none) | 11-12 |

Form PCT/ISA/210 (continuation of second sheet) (July 1998)